(19) **Europäisches Patentamt**

**European Patent Office**

**Office européen des brevets**

(11) **EP 1 016 077 B1**

(12) **EUROPÄISCHE PATENTSCHRIFT**

(45) Veröffentlichungstag und Bekanntmachung des Hinweises auf die Patenterteilung:
**16.05.2001 Patentblatt 2001/20**

(51) Int Cl.$^7$: **G10L 15/18**, G10L 15/28

(21) Anmeldenummer: **98954131.3**

(86) Internationale Anmeldenummer:
**PCT/DE98/02632**

(22) Anmeldetag: **07.09.1998**

(87) Internationale Veröffentlichungsnummer:
**WO 99/14740 (25.03.1999 Gazette 1999/12)**

(54) **VERFAHREN ZUR BESTIMMUNG EINER WAHRSCHEINLICHKEIT FÜR DAS AUFTRETEN EINER FOLGE VON MINDESTENS ZWEI WÖRTERN BEI EINER SPRACHERKENNUNG**

METHOD FOR DETERMINING THE PROBABILITY OF THE OCCURRENCE OF A SEQUENCE OF AT LEAST TWO WORDS IN A SPEECH RECOGNITION PROCESS

PROCEDE POUR DETERMINER LA PROBABILITE D'APPARITION D'UNE SEQUENCE D'AU MOINS DEUX MOTS LORS D'UNE RECONNAISSANCE VOCALE

(84) Benannte Vertragsstaaten:
**DE ES FR GB IT**

(30) Priorität: **17.09.1997 DE 19740911**

(43) Veröffentlichungstag der Anmeldung:
**05.07.2000 Patentblatt 2000/27**

(73) Patentinhaber: **SIEMENS AKTIENGESELLSCHAFT**
**80333 München (DE)**

(72) Erfinder:
• **WITSCHEL, Petra**
  **D-80687 München (DE)**
• **HÖGE, Harald**
  **D-82131 Gauting (DE)**

(56) Entgegenhaltungen:
• **ELBEZE M ET AL: "A MORPHOLOGICAL MODEL FOR LARGE VOCABULARY SPEECH RECOGNITION" SPEECH PROCESSING 1, ALBUQUERQUE, APRIL 3 - 6, 1990, Bd. 1, Nr. CONF. 15, 3. April 1990, Seiten 577-580, XP000146534 INSTITUTE OF ELECTRICAL AND ELECTRONICS ENGINEERS**
• **MALTESE G ET AL: "AN AUTOMATIC TECHNIQUE TO INCLUDE GRAMMATICAL AND MORPHOLOGICAL INFORMATION IN A TRIGRAM-BASED STATISTICAL LANGUAGE MODEL" SPEECH PROCESSING 1, SAN FRANCISCO, MAR. 23 - 26, 1992, Bd. 1, Nr. CONF. 17, 23. März 1992, Seiten 157-160, XP000341107 INSTITUTE OF ELECTRICAL AND ELECTRONICS ENGINEERS**
• **JARDINO M ET AL: "AUTIMATIC WORD CLASSIFICATION USINF SIMULATED ANNEALING" SPEECH PROCESSING, MINNEAPOLIS, APR. 27 - 30, 1993, Bd. 2, 27. April 1993, Seiten II-41-44, XP000427720 INSTITUTE OF ELECTRICAL AND ELECTRONICS ENGINEERS**

**Beschreibung**

Die Erfindung betrifft ein Verfahren zur Bestimmung einer Wahrscheinlichkeit für das Auftreten einer Folge von mindestens zwei Wörtern bei einer Spracherkennung durch einen Rechner.

Ein Verfahren zur Spracherkennung ist aus [1] bekannt. Dabei ist es als ein Bestandteil der Worterkennung üblich, die Brauchbarkeit einer Folge aus mindestens einem Wort anzugeben. Ein Maß für diese Brauchbarkeit ist eine Wahrscheinlichkeit.

Ein statistisches Sprachmodell ist aus [2] bekannt. So kennzeichnet die Wahrscheinlichkeit P(W) für eine Wortfolge W im Rahmen der Spracherkennung, vorzugsweise großer Vokalmengen, allgemein ein (statistisches) Sprachmodell. Die Wahrscheinlichkeit P (W) (sog.: Wortfolgewahrscheinlichkeit) wird angenähert durch ein N-Gramm-Sprachmodell $P_N(W)$:

$$P_N(W) = \prod_{i=0}^{n} P\big(w_i \mid w_{i-1}, w_{i-2}, \ldots, w_{i-N+1}\big), \qquad (0\text{-}1)$$

wobei

$w_i$    das i-te Wort der Folge W mit (i=1..n),

$n$    die Anzahl der Wörter $w_i$ der Folge W

bezeichnen.

Für N=2 ergeben sich aus Gleichung (0-1) sogenannte Bigramme.

Ferner ist bekannt, bei der Spracherkennung, vorzugsweise im kommerziellen Umfeld, ein im Vokabular beschränktes Anwendungsgebiet (Domäne) zu verwenden. Texte verschiedener Domänen unterscheiden sich nicht nur im Hinblick auf ihr jeweiliges Vokabular, sondern auch hinsichtlich ihres jeweiligen Satzaufbaus. Für ein Trainieren eines Sprachmodells für eine spezielle Domäne ist eine entsprechend große Menge an Texten (Textmaterial, Textkorpus) notwendig, das jedoch in der Praxis nur selten vorhanden oder nur mit immensem Aufwand zu gewinnen ist.

Ein linguistisches Lexikon ist aus [4] bekannt. Dabei handelt es sich um eine auf einem Rechner verfügbare Zusammenstellung möglichst vieler Wörter einer Sprache zum Zwecke des Nachschlagens von linguistischen Eigenschaften anhand eines Suchprogramms. Für jeden Worteintrag (sog. Wortvollform) können die für diese Wortvollform relevanten linguistischen Merkmale und die zutreffenden Belegungen, also die linguistischen Werte, entnommen werden.

Aus [3] ist bekannt, linguistische Klassen zu verwenden. Wörter eines Satzes können auf unterschiedliche Arten in linguistischen Merkmalen und linguistischen Werten zugeordnet werden. In Tabelle 1 sind beispielhaft verschiedene linguistische Merkmale und die zugehörigen Werte dargestellt (weitere Beispiele sind in [3] angegeben).

Tabelle 1:

| Beispiele für ling. Merkmale und ling. Werte | |
|---|---|
| **ling. Merkmal** | **linguistische Werte** |
| Kategorie | Substantiv, Verb, Adjektiv, Artikel, Pronomen, Adverb, Konjunktion, Präposition, etc. |
| Typ des Substantivs | abstrakt, tierisch, als Teil des Körpers, konkret, menschlich, örtlich, materiell, als Maß, pflanzlich, zeitlich, etc. |
| Art des Pronomens | demonstrativ, indefinit, interrogativ, possessiv, etc. |

Basierend auf linguistischen Merkmalen

$$(f_1, \ldots, f_m) \qquad (0\text{-}2)$$

und linguistischen Werten

$$(v_{11}...v_{1j}) \, ... \, (v_{m1}...v_{mj}) \qquad\qquad (0\text{-}3)$$

wird jedem Wort mindestens eine linguistische Klasse zugewiesen, wobei folgende Abbildungsvorschrift F Anwendung findet:

$$(c_1, \, ... \, , c_k) = F\left(\left(f_1, v_{11}, \, ... \, , v_{1j}\right). \, . \, . \left(f_m, v_{m1}, \, ... \, , v_{mj}\right)\right) \quad (0\text{-}4)$$

wobei

| | |
|---|---|
| $f_m$ | ein linguistisches Merkmal, |
| m | die Anzahl linguistischer Merkmale, |
| $v_{m1} ... v_{mj}$ | die linguistischen Werte des linguistischen Merkmals $f_m$, |
| j | die Anzahl der linguistischen Werte, |
| $C_i$ | die linguistische Klasse mit i=1..k, |
| k | die Anzahl der linguistischen Klassen, |
| F | eine Abbildungsvorschrift (Klassifikator) von linguistischen Merkmalen und linguistischen Werten auf linguistische Klassen |

bezeichnen.

Zur Veranschaulichung der linguistischen Klasse, des linguistischen Merkmals (engl. feature), des linguistischen Werts (engl. value) und der Klassen-Bigramm-Wahrscheinlichkeit wird nachfolgend ein Beispiel erläutert.

Ausgegangen wird von dem *deutschen* Satz:

"der Bundestag setzt seine Debatte fort"

Der Artikel "der" (also das erste Wort) kann im Deutschen in sechs linguistische Klassen (fortan nur: Klassen) unterteilt werden, wobei sich die Klassen in Numerus, Genus und Kasus unterscheiden. Die folgende Tabelle 2 veranschaulicht diesen Zusammenhang:

Tabelle 2:

| Klassen $C_i$ für das Wort "der" | | | | |
|---|---|---|---|---|
| $C_i$ | Kategorie | Numerus | Genus | Kasus |
| $C_1$ | Artikel | Singular | maskulinum | Nominativ |
| $C_2$ | Artikel | Singular | femininum | Genitiv |
| $C_3$ | Artikel | Singular | femininum | Dativ |
| $C_4$ | Artikel | Plural | femininum | Genitiv |
| $C_5$ | Artikel | Plural | maskulinum | Genitiv |
| $C_6$ | Artikel | Plural | neutrum | Genitiv |

Für das deutsche Substantiv "Bundestag" (zweites Wort des obigen Beispielsatzes) folgt analog Tabelle 3:

Tabelle 3:

| Klassen $C_i$ für das Wort "Bundestag" | | | | |
|---|---|---|---|---|
| $C_i$ | Kategorie | Numerus | Genus | Kasus |
| $C_7$ | Substantiv | Singular | maskulinum | Nominativ |
| $C_8$ | Substantiv | Singular | maskulinum | Akkusativ |
| $C_9$ | Substantiv | Singular | maskulinum | Dativ |

In diesem Beispiel folgt nun im Hinblick auf Klassen-Bigramme, also Bigrammen angewandt auf linguistische Klassen, daß die Klasse $C_1$, gefolgt von der Klasse $C_7$ die richtige Kombination von Kategorie, Numerus, Kasus und Genus bezüglich des Beispielsatzes darstellt. Wenn Häufigkeiten real vorkommender Klassen-Bigramme aus vorgegebenen Texten bestimmt werden, so folgt für das obige Klassen-Bigramm $C_1$-$C_7$ ein zahlreiches Auftreten, da diese Kombination in der deutschen Sprache oft vorkommt, wohingegen die Kombination anderer Klassen-Bigramme, z.B. die Kombination $C_2$-$C_8$ in der deutschen Sprache wegen unterschiedlicher Geni nicht erlaubt ist. Die sich aus den auf diese Art gefundenen Häufigkeiten ergebenden Klassen-Bigramm-Wahrscheinlichkeiten sind entsprechend hoch (bei oftmaligem Auftreten) bzw. niedrig (falls nicht zulässig).

Die **Aufgabe** der Erfindung besteht darin, ein Verfahren zur Bestimmung einer Wahrscheinlichkeit für das Auftreten einer Folge von mindestens zwei Wörtern bei einer Spracherkennung anzugeben, wobei ein Sprachmodell für eine Domäne aus wenig Textmaterial bestimmt wird.

Hierbei sei angemerkt, daß eine Bestimmung des Sprachmodells ausdrücklich die Erzeugung als auch eine Adaption eines bestehenden Sprachmodells umfaßt.

Die Aufgabe wird gemäß den Merkmalen des Patentanspruchs 1 gelöst.

Erfindungsgemäß angegeben wird ein Verfahren zur Bestimmung einer Wahrscheinlichkeit für das Auftreten einer Folge von mindestens zwei Wörtern bei einer Spracherkennung durch einen Rechner. Eine Sprache weist linguistische Klassen

$$(C_1, \ldots, C_k) \tag{1}$$

gemäß

$$(C_1, \ldots, C_k) = F\left(\left(f_1, v_{11}, \ldots, v_{1j}\right) \cdots \left(f_m, v_{m1}, \ldots, v_{mj}\right)\right) \tag{2},$$

wobei

| | |
|---|---|
| $f_m$ | ein linguistisches Merkmal, |
| $m$ | die Anzahl linguistischer Merkmale, |
| $v_{m1} \ldots v_{mj}$ | die linguistischen Werte des linguistischen Merkmals $f_m$, |
| $j$ | die Anzahl der linguistischen Werte, |
| $C_i$ | die linguistische Klasse mit i=1..k, |
| $k$ | die Anzahl der linguistischen Klassen, |
| $F$ | eine Abbildungsvorschrift (Klassifikator) von linguistischen Merkmalen und linguistischen Werten auf linguistische Klassen |

bezeichnen, auf.

Dabei wird einem Wort mindestens eine der linguistischen Klassen zugeordnet. Eine Wahrscheinlichkeit P(W) für das Auftreten der Folge von mindestens zwei Wörtern ergibt sich unter Verwendung von Bigrammen zu

$$P(W) \approx \prod_{i=1}^{n} \sum_{C_i} \sum_{C_{i-1}} P\left(w_i \mid C_i\right) \times P\left(C_i \mid C_{i-1}\right) \times P\left(C_{i-1} \mid w_{i-1}\right) \tag{3}$$

wobei

| | |
|---|---|
| $W$ | die Folge von mindestens zwei Wörtern, |
| $w_i$ | das i-te Wort der Folge W mit (i=1..n), |
| $n$ | die Anzahl der Wörter $w_i$ der Folge W, |
| $C_i$ | eine linguistische Klasse, die zu einem Wort $w_i$ gehört, |
| $C_{i-1}$ | eine linguistische Klasse, die zu einem Wort $w_{i-1}$ gehört, |
| $\sum_{Ci}$ | die Summe über alle linguistischen Klassen C, die zu einem Wort $w_i$ gehören, |
| $P(w_i \mid C_i)$ | die bedingte Wortwahrscheinlichkeit, |
| $P(C_i \mid C_{i-1})$ | die Wahrscheinlichkeit für Bigramme (auch: Klassen-Bigramme-Wahrscheinlichkeit), |
| $P(C_{i-1} \mid w_{i-1})$ | die bedingte Klassenwahrscheinlichkeit |

bezeichnen.

Hierbei sei angemerkt, daß sich der Term $C_i$ auf eine der mindestens einen linguistischen Klasse bezieht, die dem Wort $w_i$ aus der Wortfolge W zugeordnet wird. Das gleiche gilt entsprechend für den Term $C_{i-1}$. Beispielsweise handelt es sich bei der Klassen-Bigramm-Wahrscheinlichkeit um die Wahrscheinlichkeit dafür, daß das Wort $w_i$ einer ersten linguistischen Klasse angehört unter der Bedingung, daß das vorhergehende Wort $w_{i-1}$ einer zweiten linguistischen Klasse angehört (siehe hierzu einleitendes Beispiel und Erläuterung hierzu.

Die Wahrscheinlichkeiten $P(w_i|C_i)$ und $P(C_i|C_{i-1})$, die eingesetzt in Gleichung (3) ein sogenanntes Basissprachmodell ergeben, können aus einem Textkorpus, also aus einem vorgegebenem Text mit vorgegebenem Umfang, bestimmt werden.

Sprachmodelle, die auf linguistischen Klassen basieren, bieten insbesondere für eine Adaption entscheidende Vorteile. Das hier vorgestellte Verfahren verwendet die in den Sprachmodellen enthaltenen linguistischen Eigenschaften.

Eine Weiterbildung besteht darin, daß für einen neuen Text anhand eines vorbestimmten Basissprachmodells die Wahrscheinlichkeit

$$P\left(C_i | C_{i-1}\right)$$

in das Basissprachmodell für den neuen Text übernommen wird.

Wahrscheinlichkeiten für Klassen-Bigramme des Basissprachmodells (siehe [3] und Erläuterung in der Einleitung) stellen einerseits eine grammatikalische Struktur des Trainingstextes dar und sind andererseits vom Vokabular unabhängig. Geht man davon aus, daß die neue Domäne von ähnlicher Textstruktur (grammatikalischer Struktur) wie der ursprüngliche Trainingstext für das Basissprachmodell ist, so ist es zweckmäßig, die Wahrscheinlichkeit für die Klassen-Bigramme

$$P\left(C_i | C_{i-1}\right)$$

aus dem Basissprachmodell unverändert zu übernehmen.

Das Vokabular für die neue Domäne, für die ein Sprachmodell bestimmt wird, wird mit Hilfe eines vorgegebenen linguistischen Lexikons und unter Verwendung eines Klassifikators F gemäß Gleichung (2) bearbeitet. Für jedes neue Wort aus dem Text wird automatisch mindestens eine linguistische Klasse bestimmt. Zur detaillierten Beschreibung von linguistischen Klassen, linguistischen Merkmalen und linguistischen Werten siehe [3], zum linguistischen Lexikon siehe [4] und/oder jeweils die Einleitung.

Eine andere Weiterbildung besteht darin, die Wahrscheinlichkeit

$$P\left(w_i | C_i\right)$$

nach mindestens einer der folgenden Möglichkeiten zu bestimmen:

a) die Wahrscheinlichkeit

$$P\left(w_i | C_i\right)$$

wird anhand des Textes bestimmt;

b) die Wahrscheinlichkeit

$$P\left(w_i | C_i\right)$$

wird für ein Wort $w_i$ mit Hilfe einer vorgegebenen Wahrscheinlichkeit $P(w_i)$ bestimmt;

c) die Wahrscheinlichkeit

$$P\left(w_i \mid C_i\right)$$

wird unter Verwendung einer Wortliste bestimmt.

Eine zusätzliche Weiterbildung besteht darin, anhand der ermittelten Wahrscheinlichkeit

$$P\left(w_i \mid C_i\right)$$

das Basissprachmodell anzupassen. Dies geschieht vorzugsweise derart, daß diese ermittelten Wahrscheinlichkeiten

$$P\left(w_i \mid C_i\right)$$

in das Basissprachmodell aufgenommen werden.

Auch ist es eine Weiterbildung der Erfindung, die Wahrscheinlichkeit

$$P\left(C_{i-1} \mid w_{i-1}\right)$$

anhand der Wahrscheinlichkeit

$$P\left(w_i \mid C_i\right)$$

wie folgt zu bestimmen:

$$P\left(C_i \mid w_i\right) = K \times P(w_i \mid C_i) \times P(C_i) \qquad (4)$$

wobei

$$K = \left(\sum_{C_i} P\left(w_i \mid C_i\right) \times P\left(C_i\right)\right)^{-1} \qquad (5)$$

einen Normalisierungsfaktor bezeichnet.

Eine andere Weiterbildung der Erfindung besteht darin, eine entsprechende Folge von mindestens zwei Wörtern zu erkennen, falls die Wahrscheinlichkeit P(W) oberhalb einer vorgegebenen Schranke liegt. Ist dies nicht der Fall, so wird eine vorgegebene Aktion durchgeführt. Diese vorgegebene Aktion ist z.B. die Ausgabe einer Fehlermeldung oder der Abbruch des Verfahrens.

Im Rahmen einer anderen Weiterbildung bezieht sich der Text auf einen vorgegebenen Anwendungsbereich, eine sogenannte Domäne.

Im Rahmen der Erfindung ist es besonders von Vorteil, daß das vorgestellte Verfahren einen neuen Text von nur geringem Umfang für die Bestimmung eines Sprachmodells einer neuen Domäne benötigt.

Auch ist von Vorteil, daß Listen von neuen Wörtern (mit oder ohne Angabe der Wahrscheinlichkeit $P(w_i)$) verwendet werden können. Domänenbezogene Spracherkennung spielt in der Praxis eine große Rolle. Das Verfahren begegnet somit einer realen Anforderung und hat sich im Experiment als geeignet und überaus nützlich erwiesen. Greift man auf das Basissprachmodell zurück, so reduziert sich die Anzahl der neu abzuschätzenden Wahrscheinlichkeiten (Abschätzung nur von

$$P\left(w_i \mid C_i\right)$$

notwendig) erheblich.

Weiterbildungen der Erfindung ergeben sich auch aus den abhängigen Ansprüchen.

Anhand der folgenden Figuren werden Ausführungsbeispiele der Erfindung näher dargestellt.

Es zeigen

Fig. 1   ein Blockdiagramm, das Schritte eines Verfahrens zur Bestimmung einer Wahrscheinlichkeit für das Auftreten einer Folge von mindestens einem Wort bei einer Spracherkennung durch einen Rechner umfaßt,

Fig.2   ein erstes Adaptionsverfahren zur Bestimmung der Wahrscheinlichkeit

$$P\left(w_i|C_i\right),$$

Fig.3   ein zweites Adaptionsverfahren zur Bestimmung der Wahrscheinlichkeit

$$P\left(w_i|C_i\right).$$

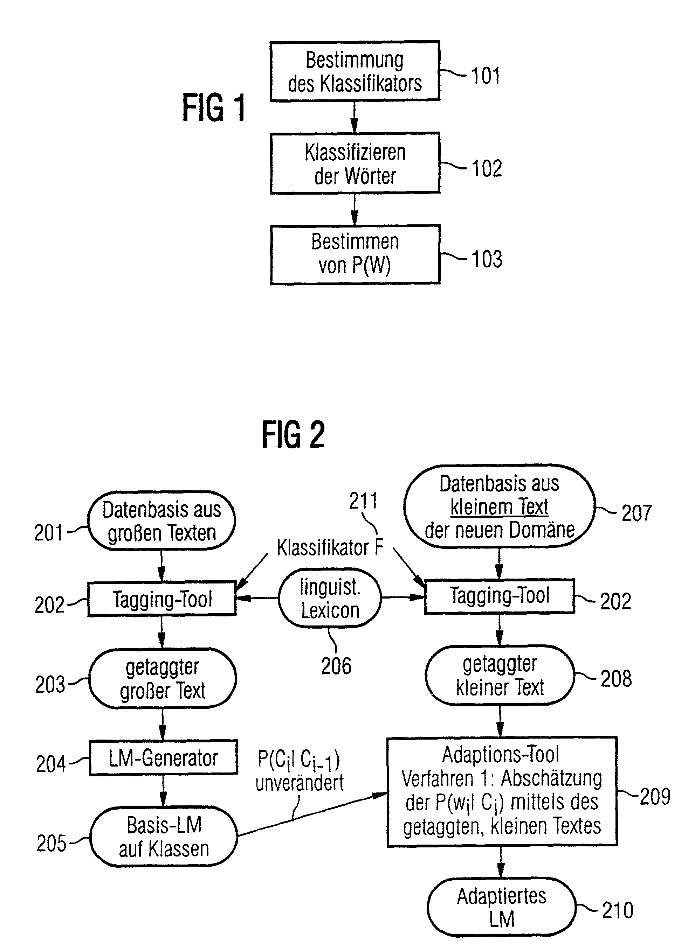

**Fig.1** stellt einzelne Schritte des Verfahrens zur Bestimmung einer Wahrscheinlichkeit für das Auftreten einer Folge von mindestens zwei Wörtern bei einer Spracherkennung durch einen Rechner dar. In einem Schritt 101 wird Sprache in linguistische Klassen

$$\left(C_1,\ldots,C_k\right) \qquad\qquad (1)$$

unterteilt:

$$\left(C_1,\ldots,C_k\right) = F\left(\left(f_1,v_{11},\ldots,v_{1j}\right)\ldots\left(f_m,v_{m1},\ldots,v_{mj}\right)\right) \quad (2),$$

wobei

| | |
|---|---|
| $f_m$ | ein linguistisches Merkmal, |
| m | die Anzahl linguistischer Merkmale, |
| $v_{m1}\ldots v_{mj}$ | die linguistischen Werte des linguistischen Merkmals $f_m$, |
| j | die Anzahl der linguistischen Werte, |
| $C_i$ | die linguistische Klasse mit i=1..k, |
| k | die Anzahl der linguistischen Klassen, |
| F | eine Abbildungsvorschrift (Klassifikator) von linguistischen Merkmalen und linguistischen Werten auf linguistische Klassen |

bezeichnen.

Eine ausführliche Erklärung der linguistischen Merkmale und der linguistischen Werte findet sich in [3], z.B. auf Seite 1201 in Tabelle 4 wird eine beispielhafte Aufstellung von linguistischen Merkmalen mit zugehörigen linguistischen Werten abhängig von unterschiedlichen Kategorien gezeigt.

In einem Schritt 102 wird einem Wort mindestens eine der linguistischen Klassen zugeordnet. Wie in [3] beschrieben ist, kann einem Wort eine oder mehrere der linguistischen Klassen zugeordnet werden.

Schließlich wird in einem Schritt 103 die Wahrscheinlichkeit P(W) für das Auftreten der Folge von mindestens zwei Wörtern bestimmt durch

$$P(W) \approx \prod_{i=1}^{n} \sum_{C_i} \sum_{C_{i-1}} P\left(w_i|C_i\right) \times P\left(C_i|C_{i-1}\right) \times P\left(C_{i-1}|w_{i-1}\right) \quad (3)$$

wobei

| | |
|---|---|
| W | die Folge von mindestens zwei Wörtern, |
| $w_i$ | das i-te Wort der Folge W mit (i=1..n), |
| n | die Anzahl der Wörter $w_i$ der Folge W, |
| $C_i$ | eine linguistische Klasse, die zu einem Wort $w_i$ gehört, |
| $C_{i-1}$ | eine linguistische Klasse, die zu einem Wort $w_{i-1}$ gehört, |
| $\Sigma_{Ci}$ | die Summe über alle linguistischen Klassen C, die zu einem Wort $w_i$ gehören, |
| $P(w_i|C_i)$ | die bedingte Wortwahrscheinlichkeit, |
| $P(C_i|C_{i-1})$ | die Wahrscheinlichkeit für Bigramme (auch: Klassen-Bigramme, Bigramm-Wahrscheinlichkeit), |
| $P(C_{i-1}|w_{i-1})$ | die bedingte Klassenwahrscheinlichkeit |

bezeichnen.

Die Gleichung (3) besteht aus einer kaskadierten Multiplikation dreier Komponenten

$$P\left(C_i|\,C_{i-1}\right),\ P\left(w_i|\,C_i\right)\ \text{und}\ P\left(C_{i-1}|\,w_{i-1}\right),$$

die nachfolgend im einzelnen bestimmt werden.

**Bestimmung der Wahrscheinlichkeit $P(C_i|C_{i-1})$ :**

Vokabeln des Textes für die neue Domäne werden mit Hilfe eines linguistischen Lexikons unter Verwendung eines Klassifikators F, wie in Gleichung (2) gezeigt, linguistischen Klassen zugeordnet. Dabei wird jedes neue Wort automatisch mindestens einer linguistischen Klasse zugeordnet. Ein Basissprachmodell umfaßt Wahrscheinlichkeiten für Klassen-Bigramme [3], wobei diese Wahrscheinlichkeit einerseits eine grammatikalische Struktur repräsentiert, andererseits von den einzelnen Wörtern unabhängig ist. Wird nun davon ausgegangen, daß die Domäne, also der spezielle anwendungsbezogene Themenbereich, von einer ähnlichen Textstruktur ist wie der dem Basissprachmodell zugrundeliegende Trainingstext, so wird die Wahrscheinlichkeit für Klassen-Bigramme

$$P\left(C_i|\,C_{i-1}\right)$$

aus dem Basissprachmodell unverändert übernommen. Eine solche automatische Zuordnung ist möglich, da, weitgehend unabhängig vom Inhalt eines Textes, davon ausgegangen werden kann, daß linguistische Merkmale und linguistische Werte, also eine Abbildung in linguistische Klassen (siehe Gleichung (2)), eigentümlich für eine Sprache sind und daher vorteilhaft von einem Themenbereich (Domäne) auf einen anderen Themenbereich übertragen werden können. Grammatikalische Strukturen vieler Trainingstexte sind ähnlich bzw. gleich, unabhängig von dem den jeweiligen Trainingstexten zugrundeliegenden Themenbereich (Domäne). Die Wahrscheinlichkeit

$$P\left(C_i|\,C_{i-1}\right),$$

die für das Basissprachmodell aufgrund von vorausgegangenen Trainingsdurchgängen bestimmt wurde, stellt in Bezug auf die Klassenzuordnung des Vokabulars des neuen Textes ein Grundwissen dar, das nicht erneut bestimmt werden muß, sondern, so das Basissprachmodell einen ausreichenden Grad an Ausführlichkeit aufweist, übernommen werden kann.

**Bestimmung der Wahrscheinlichkeit $P(w_i|C_i)$:**

Die Wahrscheinlichkeit

$$P\left(w_i|\,C_i\right)$$

für alle bezüglich des Basissprachmodells neuen Wörter $w_i$ sind neu zu berechnen und die Wahrscheinlichkeit

$$P\left(w_i|\, c_i\right)$$

(Wortwahrscheinlichkeit) des im Basissprachmodell vorhandenen Vokabulars ist vorzugsweise entsprechend anzupassen. Zur Bestimmung der Wahrscheinlichkeit

$$P\left(w_i|\, c_i\right)$$

werden nachfolgend *drei* unterschiedliche Methoden erläutert:

Methode 1:

Die Wahrscheinlichkeit

$$P\left(w_i|\, c_i\right)$$

für alle neuen Wörter $w_i$ der neuen Domäne wird auf Basis des Textes für die neue Domäne abgeschätzt. Es wird ausgegangen von einem auf linguistischen Klassen basierenden Basissprachmodell, wobei die neu abgeschätzte Wahrscheinlichkeit

$$P\left(w_i|\, c_i\right)$$

vorzugsweise in das Basissprachmodell übernommen wird und somit eine Adaption des Basissprachmodells anhand des neuen Textes erfolgt. Vorzugsweise wird diese Vorgehensweise verwendet, wenn der neue Text für die neue Domäne einen ausreichenden Umfang aufweist. Jedem Wort des neuen Textes wird die im Satzkontext ermittelte mindestens eine linguistische Klasse zugewiesen. Dies wird anhand des in [3] beschriebenen "Tagging-Tools" durchgeführt. Die Wahrscheinlichkeit

$$P\left(w_i|\, c_i\right)$$

für jedes neue Wort $w_i$ wird anhand des neuen Textes abgeschätzt.
In **Fig.2** ist ein erstes Adaptionsverfahren zur Bestimmung der Wortwahrscheinlichkeit

$$P\left(w_i|\, c_i\right)$$

dargestellt. Mittels des Klassifikators F 211 und des linguistischen Lexikons 206 wird unter Verwendung des Tagging-Tools 202 (siehe detaillierte Erläuterungen zu dem Tagging-Tool unter [3]) sowohl aus einer Datenbasis aus großen Texten 201 ein großer "getaggter" Text 203 als auch aus einer Datenbasis aus einem kleinen Text der neuen Domäne (also dem neuen Text) 207 ein kleiner "getaggter" Text 208 bestimmt. Aus dem großen "getaggten" Text 203 wird mittels eines Sprachmodellgenerators 204 ein Basissprachmodell 205, das auf linguistischen Klassen beruht, bestimmt. Wie oben ausführlich beschrieben wurde, geht die Wahrscheinlichkeit

$$P\left(c_i|\, c_{i-1}\right)$$

unverändert in das Sprachmodell für die neue Domäne ein. Aus dem "getaggten" kleinen Text 208 wird mittels eines Adaptions-Tools 209, das eine Abschätzung der Wahrscheinlichkeit

$$P\left(w_i|\, c_i\right)$$

mittels des "getaggten" kleinen Textes durchführt, ein neues, vorzugsweise adaptiertes, Sprachmodell 210 bestimmt.

Neben der beschriebenen Adaption kann ohne Einschränkung auch ein weiteres Sprachmodell erzeugt werden.

Methode 2:

Ein weiteres Verfahren reduziert die durch das Basissprachmodell gegebenen einzelnen Wortwahrschein-lichkeiten

$$P\left(w_i \mid C_i\right)$$

und überträgt den reduzierten Beitrag auf das in der jeweiligen linguistischen Klasse $C_i$ zu ergänzende Vokabular (Wörter). Dies wird abhängig von den jeweiligen Werten $P(w_i)$ der neuen Wörter durchgeführt.

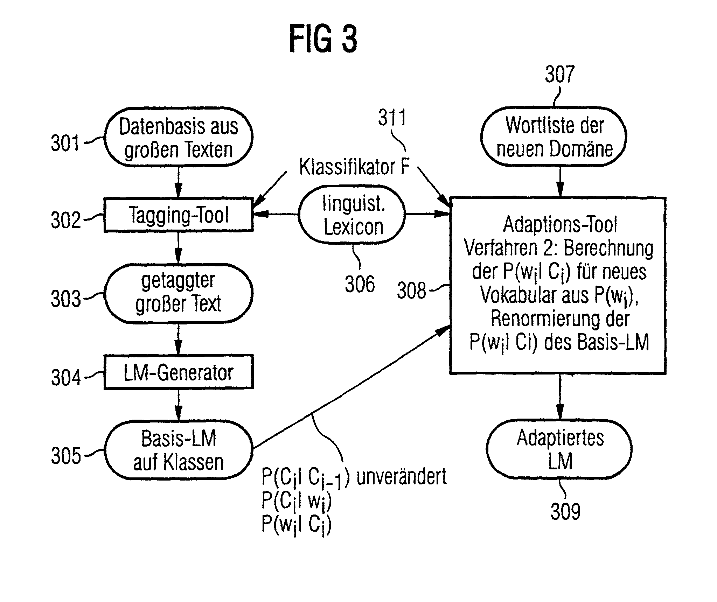

In **Fig.3** ist dieses zweite Adaptionsverfahren zur Bestimmung der Wahrscheinlichkeit

$$P\left(w_i \mid C_i\right)$$

dargestellt. Mittels des Klassifikators F 311 und des linguistischen Lexikons 306 wird anhand des Tagging-Tools 302 aus einer Datenbasis aus großen Texten 301 ein "getaggter" großer Text 303 bestimmt. Mit einem Sprachmodellgenerator 304 wird aus dem "getaggten" großen Text 303 ein Basissprachmodell 305, das auf linguistischen Klassen beruht, erstellt. Aus dem Basissprachmodell 305 wird die Wahrscheinlichkeit

$$P\left(C_i \mid C_{i-1}\right)$$

unverändert übernommen. Anhand einer Wortliste für die neue Domäne 307 wird mittels eines Adaptions-Tools 308 ein adaptiertes Sprachmodell 309 bestimmt. Auch hier kann eine Adaption eine Veränderung oder eine Erzeugung eines Sprachmodells umfassen. Das Adaptions-Tool 308 berechnet die Wahrscheinlichkeit

$$P\left(w_i \mid C_i\right)$$

für neue Wörter aus der Wahrscheinlichkeit $P(w_i)$ und führt eine Renormierung der Wahrscheinlichkeit

$$P\left(w_i \mid C_i\right)$$

des Basissprachmodells durch. Nachfolgend wird dieses Verfahren detailliert beschrieben.
Die folgenden Größen sind durch das Basissprachmodell gegeben:

$w_i$     Vokabular des Basissprachmodells mit i=1,...,N,

N     Anzahl der Wörter des Vokabulars des Basissprachmodells,

$N_C$     Anzahl der Wörter in der jeweiligen Klasse C des Basissprachmodells,

k     Anzahl der Klassen des Basissprachmodells,

$$P\left(C_j\right)$$

für j=0,...,k; Unigramm-Wahrscheinlichkeiten für die Klassen des Basissprachmodells,

$$P\left(C_j \mid C_{j-1}\right)$$

für j=1,...,k; Bigramm-Wahrscheinlichkeiten für die Klassen des Basissprachmodells,

$$P\left(w_i \mid C_j(w_i)\right) \text{ und } P\left(C_j(w_i) \mid w_i\right)$$

und      Wortwahrscheinlichkeiten des Basissprachmodells
für alle Wörter $w_i$, mit i=1,...,N,
und alle Klassen

$$C_j(w_i)$$

mit j=0,..., k,
für die gilt: Wort $w_i$ liegt in der linguistischen Klassen $C_j$.

Die Bildung linguistischer Klassen eines Sprachmodells für die neue Domäne entspricht der Bildung linguistischer Klassen für das Basissprachmodell. Der Klassifikator F (siehe Gleichung (2)) des Basissprachmodells wird übernommen. Also ist die Anzahl der linguistischen Klassen k unverändert. Es wird für die neue Domäne von Texten ähnlicher Struktur wie dem Basissprachmodell zugrundeliegende Trainingstexte ausgegangen. Die Wahrscheinlichkeit der Klassen-Bigramme

$$P\left(C_i \mid C_{i-1}\right)$$

und die Wahrscheinlichkeit von Klassen-Unigrammen $P(C_j)$ des Basissprachmodells bleiben unverändert.

Zu betrachten bleiben die Wahrscheinlichkeit

$$P\left(w_i \mid C_j(w_i)\right)$$

und die Wahrscheinlichkeit

$$P\left(C_j(w_i) \mid w_i\right),$$

die sich jeweils auf einzelne Wörter beziehen. Die Wahrscheinlichkeit

$$P\left(w_i \mid C_j(w_i)\right)$$

und die Wahrscheinlichkeit

$$P\left(C_j(w_i) \mid w_i\right)$$

werden für die nicht im Basissprachmodell enthaltenen Wörter der neuen Domäne neu berechnet. Bereits vorhandene Wahrscheinlichkeiten für die Wörter des Basissprachmodells sind zu reskalieren.

Für die neue Domäne sind folgende Werte gegeben:

$w_h$     Vokabular der neuen Domäne mit h=1,...,L, das nicht im Basissprachmodell enthalten ist.

L     Anzahl der Wörter des Vokabulars im Sprachmodell für die neue Domäne (Zielsprachmodell),

$L_C$     Anzahl der neuen Wörter $w_h$ und der Wörter $w_i$ des Basissprachmodells in der jeweiligen (linguistischen) Klasse C,

EP 1 016 077 B1

$P(w_h)$    klassenunabhängige Wortwahrscheinlichkeiten in der neuen Domäne. Die Wahrscheinlichkeit $P(w_h)$ ist gegeben durch eine Wortliste mit Worthäufigkeiten und die Größe des zugrundeliegenden Textes.

Abschätzung der Wahrscheinlichkeit

$$P\left(C_j(w_h)\mid w_h\right):$$

Zur Abschätzung der Wahrscheinlichkeit

$$P\left(C_j(w_h)\mid w_h\right),$$

jeweils für das neue Vokabular $w_h$, wird davon ausgegangen, daß

$$P\left(C_j(w_h)\mid w_h\right)$$

annähernd gleich ist für Wörter, die in derselben Klasse Cj liegen. Demnach gilt folgende Näherung:

$$P\left(C_j\mid w_h\right) \approx \frac{1}{N_C} \times \sum_{i=1}^{N_C} P\left(C_j\mid w_i\right) \tag{6},$$

wobei $w_i$ alle Wörter des Basissprachmodells bezeichnet, die in der Klasse $C_j$ liegen.
Für die folgenden Ausführungen wird exemplarisch eine Klasse $C_j$ untersucht. Zur vereinfachten Darstellung wird im folgenden diese Klasse $C_j$ als Klasse C bezeichnet.
Vorhandene Wahrscheinlichkeitswerte sind zu renormieren. Nachfolgend werden die "alten" Werte mit einer Tilde gekennzeichnet.
Eine weitere Näherungslösung für die Gleichung (6) ist die Summe über die Wörter $w_i$, für die alle linguistischen Klassen mit den Klassen des neuen Wortes übereinstimmen.
Zur Berechnung der neuen Wahrscheinlichkeit

$$P\left(w_h\mid C(w_h)\right)$$

bzw. zur Renormierung der gegebenen Wahrscheinlichkeiten $P(w_i|C(w_i))$ wird folgendes Verfahren angewandt:

1) Bestimmung des Anteils $\alpha$ der neuen Wörter im Wortschatz

2) Renormierung von

$$\tilde{P}\left(w\right) \tag{7}$$

mit:

$$P\left(w_i\right) = (1-\alpha) \times \tilde{P}\left(w_i\right) \tag{8}$$

Bestimmung des Anteils $\alpha$ gemäß Gleichung (11)

3) Bestimmung des Anteils 1-$\gamma_C$ der neuen Wörter in der Klasse C,

4) Bestimmung von

$$\tilde{P}\left(w_h \mid C\right)$$

gemäß Gleichung (17),

5) Bestimmung von $\gamma_C$ nach Gleichung (16),

6) Bestimmung der Wahrscheinlichkeit

$$P\left(w_h \mid C\left(w_h\right)\right)$$

durch:

$$P\left(w_h \mid C\right) = \frac{\gamma_C}{1 - \alpha}\,\tilde{P}\left(w_h \mid C\right) \tag{9},$$

siehe auch Gleichung (16). Der Faktor kann als Quotient der Anteile der alten Wörter in der linguistischen Klasse C und dem Anteil des alten Wortschatzes im Gesamtwortschatz interpretiert werden.

Zur Bestimmung des Anteils $\alpha$ folgt mit Gleichung (8):

$$1 = \sum_{i=1}^{N_C} \tilde{P}\left(w_i\right) = \sum_{i=1}^{N_C} P\left(w_i\right) + \sum_{h=N_C+1}^{L_C} P\left(w_h\right) =$$

$$\tag{10},$$

$$= (1 - \alpha) \times \sum_{i=1}^{N_C} \tilde{P}\left(w_i\right) + \sum_{h=N_C+1}^{L_C} P\left(w_h\right)$$

daraus folgt:

$$\alpha = \sum_{h=N_C+1}^{L_C} P\left(w_h\right) \tag{11}.$$

Zur Bestimmung des Anteils $\gamma_C$ wird der Satz von Bayes auf Gleichung (6) (siehe hierzu [5]) angewandt. Es folgt:

$$P\left(w_h \mid C\right) = \frac{P\left(w_h\right)}{N_C} \times \sum_{i=1}^{N_C} \frac{P\left(w_i \mid C\right)}{P\left(w_i\right)} \tag{12}.$$

Anhand von Gleichung (12) und unter Anwendung der Normierungseigenschaft für Wahrscheinlichkeitswerte (siehe [6]) kann gezeigt werden:

$$\sum_{i=1}^{N_C} P\left(w_i \mid C\right) + \sum_{h=N_C+1}^{L_C} \frac{P\left(w_h\right)}{N_C} \times \sum_{i=1}^{N_C} \frac{P\left(w_i \mid C\right)}{P\left(w_i\right)} = 1 \tag{13}.$$

Für

$$P\left(w_i \mid C\right) = \gamma_C \times \tilde{P}\left(w_i \mid C\right) \tag{14}$$

mit $\gamma_C \leq 1$ und

$$\tilde{P}\left(w_i \mid C\right)$$

als alte (nicht renormierte) Verteilung, gilt:

$$\left(1 + \sum_{h=N_C+1}^{L_C} \frac{P\left(w_h\right)}{N_C} \times \sum_{i=1}^{N_C} \frac{\tilde{P}\left(w_i \mid C\right)}{P\left(w_i\right)}\right) \times \gamma_C = 1 \tag{15}.$$

Daraus folgt mit Gleichung (8):

$$\gamma_C = \left(1 + \frac{1}{1-\alpha} \times \sum_{h=N_C+1}^{L_C} \tilde{P}\left(w_h \mid C\right)\right)^{-1} \tag{16}$$

mit

$$\tilde{P}\left(w_h \mid C\right) = \frac{P\left(w_h\right)}{N_C} \times \sum_{i=1}^{N_C} \frac{\tilde{P}\left(w_i \mid C\right)}{\tilde{P}\left(w_i\right)} \tag{17}.$$

Methode 3:

Die Wahrscheinlichkeit

$$P\left(w_i \mid C_i\right)$$

für bezüglich des Basissprachmodells neue Wörter $w_i$ wird unter Verwendung einer entsprechenden Wortliste angenähert. Bei dieser Vorgehensweise wird die Lösungsstrategie von dem unter 'Methode 2' beschriebenen Verfahren übernommen. Die hier nicht vorhandene Wahrscheinlichkeit $P(w_h)$ für die neuen Wörter $w_h$ wird angenähert. Dies erfolgt in Abhängigkeit zu einer Hauptkategorie HC des jeweiligen Wortes $w_h$. Es ergibt sich näherungsweise:

$$P\left(w_h\right) \approx \frac{1}{N_{HC}} \times \left( \sum_{w_i \text{ aus } HC} \left( \sum_{C_j(w_i)} P\left(w_i \mid C_j\right) \times P\left(C_j\right) \right) \right) \qquad (18).$$

Hierzu werden Eigenschaften von Wörtern $w_i$ des Basissprachmodells verwendet. $N_{HC}$ ist eine Anzahl des Vokabulars des Basissprachmodells, das in der Hauptkategorie HC liegt. Die Summierung läuft über alle Klassen $C_j$ des Basissprachmodells, zu denen das jeweilige Wort $w_i$ gehört.

**Bestimmung der Wahrscheinlichkeit $P(C_{i-1}|w_{i-1})$ :**

Schließlich wird die Wahrscheinlichkeit

$$P\left(C_{i-1} \mid w_{i-1}\right)$$

wie nachfolgend beschrieben bestimmt. Es sei angemerkt, daß in Gleichung (3) die Wahrscheinlichkeit

$$P\left(C_{i-1} \mid w_{i-1}\right)$$

einen Index 'i-1' aufweist, der nachfolgend zur Vereinfachung als Index i gesetzt wird.
Die Wahrscheinlichkeit

$$P\left(C_i \mid w_i\right)$$

ergibt sich jeweils aus der Wahrscheinlichkeit

$$P\left(w_i \mid C_i\right),$$

die wie oben beschrieben, bestimmt worden ist:

$$P\left(C_i \mid w_i\right) = K \times P\left(w_i \mid C_i\right) \times P\left(C_i\right) \qquad (4)$$

mit einem Normalisierungsfaktor

$$K = \left( \sum_{C_i} P\left(w_i \middle| C_i\right) \times P\left(C_i\right) \right)^{-1} \quad (5).$$

Die linguistische Klasse $C_i$ durchläuft dabei alle für das Wort $w_i$ möglichen linguistischen Klassen. Die Wahrscheinlichkeit $P(C_i)$ wird aus dem Basissprachmodell übernommen (Unigramm-Wahrscheinlichkeit für jeweilige linguistische Klasse des Basissprachmodells).

Im Rahmen dieses Dokuments wurden folgende Veröffentlichungen zitiert:

[1] G. Ruske: "Automatische Spracherkennung - Methoden der Klassifikation und Merkmalsextraktion", Oldenbourg Verlag, München 1988, ISBN 3-486-20877-2, Seiten 1-10.

[2] L. Rabiner, B.-H. Juang: "Fundamentals of Speech Recognition", Prentice Hall 1993, S.447-450.

[3] P. Witschel: "Constructing Linguistic Oriented Language Models for Large Vocabulary Speech Recognition", 3rd EUROSPEECH 1993, Seiten 1199-1202.

[4] F. Guethner, P. Maier: "Das CISLEX-Wörterbuchsystem", CIS-Bericht 94-76-CIS, Universität München, 1994.

[5] W. Feller: "An Introduction to Probability Theory and its Applications", John Wiley & Sons, 1976, Seiten 124,125.

[6] W. Feller: "An Introduction to Probability Theory and its Applications", John Wiley & Sons, 1976, Seite 22.

**Patentansprüche**

1. Verfahren zur Bestimmung einer Wahrscheinlichkeit für das Auftreten einer Folge von mindestens zwei Wörtern bei einer Spracherkennung durch einen Rechner,

   a) bei dem eine Sprache linguistische Klassen aufweist:

$$\left(C_1, \ldots, C_k\right) = F\left(\left(f_1, v_{11}, \ldots, v_{1j}\right) \ldots \left(f_m, v_{m1}, \ldots, v_{mj}\right)\right),$$

   wobei

   | | |
   |---|---|
   | $f_1, \ldots, f_m$ | ein linguistisches Merkmal, |
   | $m$ | die Anzahl linguistischer Merkmale, |
   | $v_{m1} \ldots v_{mj}$ | die linguistischen Werte des linguistischen Merkmals $f_m$, |
   | $j$ | die Anzahl der linguistischen Werte, |
   | $C_1, \ldots, C_k$ | die linguistische Klassen, |
   | $k$ | die Anzahl der linguistischen Klassen, |
   | $F$ | eine Abbildungsvorschrift (Klassifikator) von linguistischen Merkmalen und linguistischen Werten auf linguistische Klassen |

   bezeichnen
   b) bei dem einem Wort mindestens eine der linguistischen Klassen zugeordnet wird;
   c) bei dem die Wahrscheinlichkeit für das Auftreten der Folge von mindestens zwei Wörtern bestimmt ist durch:

$$P(W) \approx \prod_{i=1}^{n} \sum_{C_i} \sum_{C_{i-1}} P\left(w_i \mid C_i\right) \times P\left(C_i \mid C_{i-1}\right) \times P\left(C_{i-1} \mid w_{i-1}\right)$$

wobei

| | |
|---|---|
| $P(W)$ | Wahrscheinlichkeit für das Auftreten der Folge von mindestens zwei Wörtern |
| $W$ | die Folge von mindestens zwei Wörtern, |
| $w_i$ | das i-te Wort der Folge W mit (i=1..n), |
| $n$ | die Anzahl der Wörter $w_i$ der Folge W, |
| $C_i$ | eine linguistische Klasse C, die zu einem Wort $w_i$ gehört, |
| $C_{i-1}$ | eine linguistische Klasse, die zu einem Wort $w_{i-1}$ gehört, |
| $\Sigma_{Ci}$ | die Summe über alle linguistischen Klassen C, die zu einem Wort $w_i$ gehören, |
| $P(w_i \mid C_i)$ | die bedingte Wortwahrscheinlichkeit, |
| $P(C_i \mid C_{i-1})$ | die Wahrscheinlichkeit für Bigramme (auch: Klassen-Bigramme, Bigramm-Wahrscheinlichkeit), |
| $P(C_{i-1} \mid w_{i-1})$ | die bedingte Klassenwahrscheinlichkeit bezeichnen. |

**2.** Verfahren nach Anspruch 1,
bei dem für einen Text anhand eines vorbestimmten Basissprachmodells die Wahrscheinlichkeit

$$P\left(C_i \mid C_{i-1}\right)$$

für den Text bestimmt wird, indem die Wahrscheinlichkeit

$$P\left(C_i \mid C_{i-1}\right)$$

aus dem Basissprachmodell übernommen wird.

**3.** Verfahren nach Anspruch 2,
bei dem die Wahrscheinlichkeit

$$P\left(w_i \mid C_i\right)$$

nach mindestens einer der folgenden Möglichkeiten bestimmt wird:

a) die Wahrscheinlichkeit

$$P\left(w_i \mid C_i\right)$$

wird anhand des Textes bestimmt;
b) die Wahrscheinlichkeit

$$P\left(w_i \mid C_i\right)$$

wird für ein Wort $w_i$ mit Hilfe einer vorgegebenen Wahrscheinlichkeit $P(w_i)$ bestimmt;
c) die Wahrscheinlichkeit

$$P\left(w_i \mid C_i\right)$$

wird unter Verwendung einer Wortliste bestimmt.

4.  Verfahren nach Anspruch 3,
    bei dem anhand der ermittelten Wahrscheinlichkeit

$$P\left(w_i \mid C_i\right)$$

das Basissprachmodell angepaßt wird.

5.  Verfahren nach Anspruch 3 oder 4,
    bei dem die Wahrscheinlichkeit

$$P\left(C_i \mid w_i\right)$$

anhand der Wahrscheinlichkeit

$$P\left(w_i \mid C_i\right)$$

wie folgt bestimmt wird:

$$P\left(C_i \mid w_i\right) = K \times P(w_i \mid C_i) \times P(C_i),$$

wobei

$$K = \left(\sum_{C_i} P\left(w_i \mid C_i\right) \times P\left(C_i\right)\right)^{-1}$$

einen Normalisierungsfaktor bezeichnet.

6.  Verfahren nach einem der vorhergehenden Ansprüche,
    bei dem, wenn die Wahrscheinlichkeit P(W) für das Auftreten einer Folge von mindestens zwei Wörtern oberhalb einer vorgegebenen Schranke liegt, die entsprechende Folge von mindestens zwei Wörtern erkannt wird, ansonsten eine vorgegebene Aktion durchgeführt wird.

7.  Verfahren nach Anspruch 6,
    bei dem die vorgegebene Aktion eine Ausgabe einer Fehlermeldung oder Anlaß für einen Abbruch des Verfahrens ist.

8.  Verfahren nach einem der Ansprüche 2 bis 7,
    bei dem sich der Text auf einen vorgegebenen Anwendungsbereich bezieht.

**Claims**

1.  Method for determining the probability of the occurrence of a sequence of at least two words in a speech recognition process by a computer,

a) in which speech has linguistic classes:

$$(C_1, \ldots, C_k) = F\left(\left(f_1, v_{11}, \ldots, v_{1j}\right) \ldots \left(f_m, v_{m1}, \ldots, v_{mj}\right)\right),$$

where

| | |
|---|---|
| $f_1,\ldots,f_m$ | denotes a linguistic feature, |
| m | denotes the number of linguistic features, |
| $V_{m1} \ldots V_{mj}$ | denote the linguistic values of the linguistic feature $f_m$, |
| j | denotes the number of linguistic values, |
| $C_1,\ldots,C_k$ | denote the linguistic classes, |
| k | denotes the number of linguistic classes, |
| F | denotes a mapping specification (classifier) for linguistic features and linguistic values to linguistic classes |

b) in which a word is assigned at least one of the linguistic classes;

c) in which the probability of the occurrence of the sequence of at least two words is determined by:

$$P(W) \approx \prod_{i=1}^{n} \sum_{C_i} \sum_{C_{i-1}} P(w_i | C_i) \times P(C_i | C_{i-1}) \times P(C_{i-1} | w_{i-1})$$

where

| | |
|---|---|
| P(W) | denotes the probability of the occurrence of the sequence of at least two words |
| W | denotes the sequence of at least two words, |
| $w_i$ | denotes the ith word of the sequence W with (i=1..n), |
| n | denotes the number of words $w_i$ of the sequence W |
| $C_i$ | denotes a linguistic class C which belongs to a word $w_i$, |
| $C_{i-1}$ | denotes a linguistic class which belongs to a word $w_{i-1}$, |
| $\Sigma C_i$ | denotes the sum of all the linguistic classes C which belong to a word $w_i$, |
| $P(w_i|C_i)$ | denotes the conditional probability of a word, |
| $P(C_i|C_{i-1})$ | denotes the probability of bi-grams (also: class bi-grams, bi-gram probability), |
| $P(C_{i-1}|w_{i-1})$ | denotes the conditional class probability. |

**2.** Method according to Claim 1, in which, for a text, a predetermined basic speech model is used as a basis for determining the probability $P(C_i|C_{i-1})$ for the text by adopting the probability $P(C_i|C_{i-1})$ from the basic speech model.

**3.** Method according to Claim 2, in which the probability $P(w_i|C_i)$ is determined in accordance with a least one of the following possibilities:

a) the probability $P(w_i|C_i)$ is determined on the basis of the text;
b) the probability $P(w_i|C_i)$ is determined for a word $w_i$ with the aid of a prescribed probability $P(w_i)$ ;
c) the probability $P(w_i|C_i)$ is determined using a word list.

**4.** Method according to Claim 3, in which the basic speech model is adapted on the basis of the ascertained probability $P(w_i|C_i)$.

**5.** Method according to Claim 3 or 4, in which the probability $P(C_i|w_i)$ is determined as follows on the basis of the probability $P(w_i|C_i)$:

$$P\left(c_i \mid w_i\right) = K \times P\left(w_i \mid c_i\right) \times P\left(c_i\right),$$

where

$$K = \left(\sum_{c_i} P\left(w_i \mid c_i\right) \times P\left(c_i\right)\right)^{-1}$$

denotes a normalizing factor.

6. Method according to one of the preceding claims, in which, if the probability P(W) of the occurrence of a sequence of at least two words lies above a prescribed limit, the corresponding sequence of at least two words is recognized, otherwise a prescribed action is carried out.

7. Method according to Claim 6, in which the prescribed action is an output of an error message or a cause for the method to be aborted.

8. Method according to one of Claims 2 to 7, in which the text relates to a prescribed area of application.

**Revendications**

1. Procédé pour déterminer une probabilité pour l'apparition d'une séquence d'au moins deux mots lors d'une reconnaissance vocale par un ordinateur,

   a) dans lequel une langue comporte des classes linguistiques :

   $$(C_1, ..., C_k) = F((f_1, v_{11}, ..., v_{1j}) ... (f_m, v_{m1}, ..., v_{mj}))$$

   avec

   $f_1, ..., f_m$ :     une caractéristique linguistique,
   $m$ :     le nombre de caractéristiques linguistiques,
   $v_{m1} \cdots v_{mj}$ :     les valeurs linguistiques de la caractéristique linguistique $f_m$,
   $j$ :     le nombre des valeurs linguistiques,
   $C_1, ..., C_k$ :     les classes linguistiques,
   $k$ :     le nombre des classes linguistiques,
   $F$:     une règle de projection (classificateur) de caractéristiques linguistiques et de valeurs linguistiques sur des classes linguistiques.

   b) dans lequel on associe à un mot au moins l'une des classes linguistiques ;
   c) dans lequel la probabilité pour l'apparition de la séquence d'au moins deux mots est déterminée par :

   $$P(W) \approx \prod_{i=1}^{n} \sum_{c_i} \sum_{c_{i-1}} P(w_i \mid c_i) \times P(c_i \mid c_{i-1}) \times P(c_{i-1} \mid w_{i-1})$$

   avec

   P(W) :          probabilité pour l'apparition de la séquence d'au moins deux mots,

W: la séquence d'au moins deux mots,

$w_i$ le i-ème mot de la séquence W avec (i = 1 .. n),

n : le nombre des mots $w_i$ de la séquence W,

$C_i$ : une classe linguistique C qui appartient à un mot $w_i$,

$C_{i-1}$ : une classe linguistique qui appartient à un mot $w_{i-1}$,

$\Sigma_{Ci}$ la somme sur toutes les classes linguistiques C qui appartiennent à un mot $w_i$,

$P(w_i|C_i)$ : la probabilité de mot conditionnée,

$P(C_i|C_{i-1})$ : la probabilité pour des bigrammes (ou probabilité de bigramme de classe),

$P(C_{i-1}|w_{i-1})$ : la probabilité de classe conditionnée.

2. Procédé selon la revendication 1, dans lequel on détermine pour un texte, à l'aide d'un modèle de langage de base prédéterminé, la probabilité $P(C_i|C_{i-1})$ pour le texte en reprenant la probabilité $P(C_i|C_{i-1})$ du modèle de langage de base.

3. Procédé selon la revendication 2, dans lequel on détermine la probabilité $P(w_i|C_i)$ selon au moins l'une des possibilités suivantes :

 a) on détermine la probabilité $P(w_i|C_i)$ à l'aide du texte ;
 b) on détermine la probabilité $P(w_i|C_i)$ pour un mot $w_i$ à l'aide d'une probabilité prédéterminée $P(w_i)$ ;
 c) on détermine la probabilité $P(w_i|C_i)$ en utilisant une liste de mots.

4. Procédé selon la revendication 3, dans lequel on adapte le modèle de langage de base à l'aide de la probabilité $P(w_i|C_i)$ déterminée.

5. Procédé selon la revendication 3 ou 4, dans lequel on détermine la probabilité $P(C_i|w_i)$ à l'aide de la probabilité $P(w_i|C_i)$ de la manière suivante :

$$P(C_i|w_i) = K \times P(w_i|C_i) \times P(C_i)$$

où

$$K = \left( \sum_{C_i} P(w_i \mid C_i) \times P(C_i) \right)^{-1}$$

est un facteur de normalisation.

6. Procédé selon l'une des revendications précédentes, dans lequel, lorsque la probabilité P(W) pour l'apparition d'une séquence d'au moins deux mots est supérieure à une limite prédéterminée, on reconnaît la séquence correspondante d'au moins deux mots, sinon on effectue une action prédéterminée.

7. Procédé selon la revendication 6, dans lequel l'action prédéterminée est une délivrance d'un message d'erreur ou un déclenchement d'une interruption du procédé.

8. Procédé selon l'une des revendications 2 à 7, dans lequel le texte se rapporte à un domaine d'application prédéterminé.

## FIG 1

```
Bestimmung
des Klassifikators        — 101
      |
      v
Klassifizieren
der Wörter                — 102
      |
      v
Bestimmen
von P(W)                  — 103
```

## FIG 2

```
201 — Datenbasis aus               211        Datenbasis aus
       großen Texten                          kleinem Text      — 207
            |              Klassifikator F     der neuen Domäne
            v                                       |
202 — Tagging-Tool  <---  linguist.  --->   Tagging-Tool        — 202
            |              Lexicon                  |
            v                 |                     v
203 — getaggter              206            getaggter           — 208
       großer Text                          kleiner Text
            |                                       |
            v                                       v
204 — LM-Generator       P(C_i| C_{i-1})    Adaptions-Tool
            |             unverändert        Verfahren 1: Abschätzung
            v                                der P(w_i| C_i) mittels des   — 209
205 — Basis-LM  ----------------------->     getaggten, kleinen Textes
       auf Klassen                                  |
                                                    v
                                            Adaptiertes           — 210
                                            LM
```

# FIG 3

307

311 — Klassifikator F

301 — Datenbasis aus großen Texten

307 — Wortliste der neuen Domäne

302 — Tagging-Tool

306 — linguist. Lexicon

303 — getaggter großer Text

308 — Adaptions-Tool Verfahren 2: Berechnung der $P(w_i | C_i)$ für neues Vokabular aus $P(w_i)$, Renormierung der $P(w_i | Ci)$ des Basis-LM

304 — LM-Generator

305 — Basis-LM auf Klassen

$P(C_i | C_{i-1})$ unverändert
$P(C_i | w_i)$
$P(w_i | C_i)$

309 — Adaptiertes LM